(19) Europäisches Patentamt
European Patent Office
Office européen des brevets

(11) Publication number: **0 047 792**
**B1**

(12) **EUROPEAN PATENT SPECIFICATION**

(45) Date of publication of patent specification: **14.12.88**

(51) Int. Cl.$^4$: **H 01 M 12/06**

(21) Application number: **80105504.7**

(22) Date of filing: **12.09.80**

# (54) Battery, gas depolarized electrochemical cell and bipolar element for the battery.

(43) Date of publication of application:
**24.03.82 Bulletin 82/12**

(45) Publication of the grant of the patent:
**14.12.88 Bulletin 88/50**

(84) Designated Contracting States:
**AT BE CH DE FR GB IT LI LU NL SE**

(56) References cited:
**DE-A- 60 806**
**DE-A-2 440 619**
**FR-A-1 506 963**
**FR-A-1 539 952**
**FR-A-2 075 986**
**FR-A-2 126 101**
**GB-A-1 158 736**
**GB-A-1 340 624**
**US-A-3 513 031**
**US-A-3 554 810**
**US-A-3 682 706**
**US-A-3 708 345**
**US-A-3 717 505**

**The file contains technical information submitted after the application was filed and not included in this specification**

(73) Proprietor: **DST SA**
**Grienbachstrasse 11**
**CH-6301 Zug (CH)**
(84) **BE CH DE FR GB IT LI LU NL AT**

(73) Proprietor: **PERMASCAND AB**
**Box 42**
**S-840 10 Ljungaverk (SE)**
(84) **SE**

(72) Inventor: **de Nora, Vittorio**
**Sandringham House**
**Nassau (BS)**
Inventor: **Spaziante, Placido M., Dr.**
**Panclor SA, P.O. Box 30**
**CH-6809 Taverne(Lugano) (CH)**

(74) Representative: **Cronin, Brian Harold John et al**
**c/o DST SA 9, Route de Troinex**
**CH-1227 Carouge/GE (CH)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 047 792 B1

**Description**

Technical Field

The invention relates to a metal-gas battery comprising a plurality of hollow box-like gas-depolarisable cathode elements and consumable metal anode elements.

Background Art

Storage batteries and other energy conversion systems in which one of the electrodes is a metal or metal alloy which goes into solution during the production of energy (discharge) and is redeposited during the storage of energy (charge) are well known. Some employ metal-to-metal couples such as nickel/cadmium or silver oxide/zinc couples. Other energy conversion apparatus use halogen or oxygen depolarized cathodes and consumable metal anodes such as, for example, zinc, iron, lead, lithium, manganese, and the like. In many cases, these energy conversion systems are recharged with the electrodes in place by redepositing or partially redepositing the consumable metal on the anode by applying an external potential to the individual units or the entire energy storage system. However, these batteries in practice are never completely restored or recharged to their original state and become progressively shorter-lived and must be out of use for considerable time during recharging.

Various U.S. patents, such as U.S. 3,436,270, U.S. 3,513,030, U.S. 3,553,024, U.S. 3,708,345, U.S. 3,717,505, U.S. 3,836,398, U.S. 3,682,706 and others, describe batteries with anodes which are removable from and reinsertable into an enclosing cathode chamber. The anodes are usually of consumable metal, or consumable, compacted or sintered metal powder, mounted on conductive, porous metal supports or screens of various metals such as nickel, iron, copper, titanium, tantalum and alloys thereof. The removal and insertion of the anodes of such prior art batteries into the cathode chambers present problems because of shape changes in the anode structure during recharging outside the cathode chamber or envelope and because the electrolyte-impregnated paper separators in the cathode chambers are often torn or destroyed during removal or reinsertion of the recoated anodes.

Alternatively, U.S. 3,708,345 discloses an energy conversion system which utilizes an electrolyte recirculation system for removing the zinc oxide reaction products from a plurality of individual electrochemical cells. The energy conversion unit comprises a plurality of electrochemical cells, each cell having a zinc anode and a porous oxygen/air cathode and means to circulate an alkaline electrolyte through the cells. Each cell of the energy conversion unit comprises an individual jet pump to transform a relatively low flow rate of high pressure liquid electrolyte from a high pressure pump into a high flow rate of low pressure electrolyte for the purpose of removing the zinc oxide from the anode surface, the zinc oxide being continuously entrained with the circulating electrolyte.

U.S. Patent 3,554,810 describes a metal-air battery, e.g. an Al-air battery with porous air cathodes and special means for controlling the electrolyte level. Sludge from the anodes can be removed by inverting a battery container, or can be delivered to precipitate collection means remote from the battery.

Disclosure of Invention

The invention, as set out in the claims, provides a process of operating a metal-gas battery and apparatus for carrying out this process.

The metal-gas battery comprises hollow box-like gas depolarisable cathode elements and consumable metal anode elements comprising consumable metal anodes which are removably mounted in an inert battery container, as set out more fully in the claims. In the bottom of the battery container there is a space wherein precipitated oxides of the dissolved anode metal can collect below the anode and cathode elements, and a drain (typically a drain valve or a valve draining nozzle) in the bottom of the battery container for draining electrolyte and collected precipitated oxides from said space during removal/replacement of the anodes when the battery is being recharged. A simple, rugged metal-gas battery is thus provided which can be recharged by replacement of the anodes and which includes provision for draining of the electrolyte with the precipitated oxide through the drain.

The anode elements consist of rigid, thin corrosion resistant metal support blanks, such as titanium, tantalum, tantalum-coated titanium, zirconium, molybdenum, niobium, yttrium, tungsten or nickel, on which the consumable electrode metal, such as zinc, may be deposited outside the cell, under the best conditions for such deposition, and the rigid anode support blank with the consumable metal redeposited thereon is inserted into the cell, opposite the cathode, and used until the consumable metal is substantially all consumed, whereupon the blank is removed from the cell and a new anode blank with consumable metal thereon is inserted, while the used blank is recoated with the consumable metal outside the cell.

Alternatively the consumable metal anode may be removably mounted in supports on the cathode box and, when substantially consumed, it may be removed from the cathode box and a new consumable anode inserted in said supports.

As zinc is the present preferred consumable anode material, it will be described as the examplary anode, but it will be understood that other consumable anodic materials, such as, for example, iron, lithium, cadmium, or the like, may also be used. The anode material must be chemically reactive with the electrolyte and must be more electropositive than oxygen.

The cathode elements are box-like structures of a metal resistant to corrosion in the particular

electrolyte used in the battery (e.g., titanium, tantalum, tantalum-coated titanium, zirconium, molybdenum, niobium, yttrium, tungsten or nickel), with a wall of sintered, porous metal on one or more faces impregnated or activated with a catalyst, such as the platinum group metals, including platinum black, platinum group metal oxides, or other catalytic metal oxides such as perovskites, delafossites, bronzes or spinel-type oxides. The activation of the sintered, porous metal wall is best effected by impregnating the degreased and slightly pickled, porous metal wall with a solution of decomposable salts of the catalytic metals, followed by heat treatment in an oxidizing or reducing atmosphere to decompose the salts and deposit the catalytic oxides or metal on the surface of the pores of the sintered wall.

As described in detail below, the internal surface of the activated porous cathode, wall, that is, the surface towards the interior of the box-like structure, is impregnated with a lipophobic (e.g., hydrophobic) resin such as a polyethylene, polypropylene, polytetrafluoroethylene, various vinyl resins, and the like, in such a way as to let the resin penetrate inside the pores for a certain depth from the surface but without reaching through the full thickness of the porous cathode. The resin partially coats the surface of the pores near the internal surface of the cathode and imparts hydrophobic properties to the gas side layer of the porous cathode. This effectively reduces flooding of the box-like structure by the electrolyte and facilitates maintaining the three-phase boundary layer within the porous cathodes.

The interior of each box-like element communicates, by means of an inlet and an outlet port, respectively, with the supply line and the exhaust line for the cathode depolarizing gas (e.g. air, oxygen or other depolarizing gas) which is circulated inside each box-like element under superatmospheric pressure preferably slightly in excess of the pressure of the electrolyte on the outside of the porous cathode structure.

During discharge of electricity from the battery, the depolarizing gas such as oxygen or oxygen-containing gas is contacted with the inside of the porous cathode elements and the electrolyte contacts the outside of the cathode elements. The gas pressure applied internally to the activated porous cathode faces is adjusted to the pressure of the electrolyte, so that the electrolyte does not flood the pores of the cathode elements and gas does not blow through into the electrolyte. Aqueous alkaline electrolytes such as NaOH, KOH and mixtures of KOH and RbOH are used. Depending upon the particular electrolyte used, different anode materials can be selected.

With oxygen or air-depolarized cathodes and zinc-coated anodes, the reaction within the cell can be represented as:

At the cathode:

$$1/2\ 0_2 + H_20 + 2e \longrightarrow 20H^-$$

At the anode:

$$Zn + 20H^- \longrightarrow Zn0 + H_20 + 2e$$

Total cell reaction:

$$Zn + 1/2\ 0_2 \longrightarrow Zn0$$

The electrolyte, held in a separate tank or reservoir, is continuously circulated through the various interelectrodic spaces in the battery by suitable distributor and collector pipes and/or conduits formed in the walls of the plastic battery container. However, during recharging, the electrolyte may be drained, with the collected precipitated oxides, through the drain in the bottom of the battery container.

Various other features and advantages of the invention will appear from the following description and claims.

## Brief Description of Drawings

Referring now to the drawings:

Fig. 1 is a perspective view of a box-type bipolar element,

Fig. 2 is an exploded view of four elements, namely, two intermediate bipolar elements and one cathodic and one anodic end element,

Fig. 3 is a plan view of a battery container in which bipolar elements are insertable and removable to provide the desired number of cell units,

Fig. 4 is a sectional view approximately on the line 4-4 of Fig. 3,

Fig. 5 is a sectional side view (with parts omitted) approximately on the line 5-5 of Fig. 7 of another embodiment of a battery, with the anodes and cathodes each having a double face so that, except for the end elements, the anodes and cathodes are active on both the front and back faces thereof,

Fig. 6 is an exploded perspective view of two cathodes elements and two anode elements according to Fig. 5 with electrical connections therebetween,

Fig. 7 is a sectional view along the line 3-3 of Fig. 5 showing the battery container into which the anodic elements, mounted on support plates, are insertable and removable to permit recoating of the anode elements outside the battery container,

Fig. 8 is a part-sectional plan view of another battery container containing oxygen-depolarized cathodes and replaceable anodes,

Fig. 9 is an enlarged detail of the anode/cathode structure of Fig. 8,

Fig. 10 is a sectional plan view of another embodiment of the invention, and

Fig. 11 is a sectional view approximately on the line 11-11 of Fig. 10.

Figs. 1 to 4 and 8 to 11 illustrate bipolar embodiments of the invention and Figs. 5 to 7 illustrate a monopolar embodiment.

## Best Modes for carrying out the Invention

As illustrated in Fig. 1, the replaceable bipolar units are individual, vertical, hollow, box-like cathode elements 1, of a valve metal, nickel,

stainless steel or the like, each consisting of an imperforate front portion 2 on which consumable anodes 5 are mounted and U-shaped top, bottom and side pieces 3, 3a and 3b, preferably formed from one piece of metal, which form a frame for a porous, gas-permeable, cathode 4 formed of sintered, activated corrosion-resistant metal, impregnated with catalytic materials such as the platinum group metals, oxides of the platinum group metals, mixed oxides thereof and other catalytic oxides such as spinels, perovskites, delafossites, bronzes and the like. The activated, sintered, porous cathode 4 is preferably formed separately and welded into the frame formed by the U-shaped parts 3, 3a and 3b.

The sintered, porous, gas-permeable cathodes 4 (and 32 and 34, Fig. 5, hereafter described) are preferably formed by sintering particles of the corrosion-resistant metal by known techniques, such as those commercially used to make metallic filter plates and tubes, to obtain a structure with a porosity of 30% to 65%. The sintered, porous cathode sections may be made of a valve metal such as titanium, tantalum, tungsten, zirconium, niobium, hafnium, vanadium, yttrium, or alloys thereof, nickel or stainless steel. The particles are preferably spherical and have a narrow size distribution. Preferred size ranges in mesh number are 10 to 30 (2000 to 595 micrometer), 30 to 50 (595 to 297 micrometer), 50 to 70 (297 to 210 micrometer) and 100 to 150 (149 to 99 micrometer), with the preferred ranges being the coarser ones, such as 10 to 30 (2000 to 595 micrometer) and 30 to 50 (595 to 297 micrometer). With these preferred particle size ranges, the catalyst-impregnated and coated cathode retains a porosity of about 50% and a very high permeability to both liquids and gases. Gas pressure with reference to porosity is regulated so that liquid electrolyte does not flood the pores of the cathode and gas does not blow through into the electrolyte.

The surfaces of the sintered, porous cathodes 4 facing the inside of the cathode boxes are preferably impregnated with a hydrophobic resin such as a fluorocarbon resin, in order to make the inner cathode surface substantially impermeable to the aqueous electrolyte while maintaining the side facing outwardly unaltered as to its permeability to electrolyte. The hydrophobic coating in conjunction with the positive pressure exerted by the gas inside the box-like elements 1 substantially avoids percolation of electrolyte into the box-like elements. However, draining means may be provided in the box-like elements 1 to dispose of minor or accidental flooding.

On the front wall 2 of the box-like bipolar element 1, a consumable and replaceable anode 5 formed of a sheet of zinc or other consumable anodic material is removably mounted. The anode sheet 5 is conductively and mechanically connected to the imperforate wall 2 by means of spring clips 6, which are conveniently made by welding suitably shaped strips of the metal along the two vertical edges of the wall 2 and a horizontal strip at the bottom of the two vertical strips. The anode 5 can easily be inserted by simply slipping it inside the vertical spring clips 6 until it engages with the bottom clip. Removal of substantially consumed anodes is a simple and rapid operation. The anodes 5 may be flat or corrugated sheets of solid or porous zinc or other consumable metal.

Suitable extractors may be provided which, engaging with holes (not shown) in the top portion of the zinc sheets, will facilitate the removal operation.

Zinc is the preferred anode material. However, any electroconductor used in metal oxygen cells, such as metals, metalloids, alloys and heavy metal salts, may be used. The anodes 5 are preferably solid metals, but porous anodes or part-porous and part-solid anodes may be used. The anodes may be flat, slightly curved or corrugated sheets.

Both the anodes 5 and the porous cathodes 4 are smaller in size than the overall dimensions of the box-like elements 1, so that inoperative edge portions are provided around the box-like elements 1 which fit into slots or other spacers 11 provided in the battery container described below.

Inlets 7 and outlets 8 are provided for introducing depolarizing gas and maintaining the required gas pressure inside the hollow, box-like elements 1.

Other means beside the spring clips shown in Fig. 1 may be provided to connect the consumable anodes 5 mechanically and electrically to the box-like structures. For example, a thermoplastic, electrically conductive cement may be used for spot-bonding the sheets 5 to the wall 2 of the box-like elements. However, the use of clips is preferred because the consumable anodes can be removed and reinserted without removing the box-like elements from the container of the battery, thus reducing the time necessary for "recharging" the battery.

Fig. 2 is an exploded view of four box-like elements 1 showing them in their electrical series spatial disposition. Each cathode 4 faces the anode 5 of the adjacent element.

The first element A of the series has an imperforate wall in place of the cathode 4, has an anode 5 carried in clips 6 thereon and is connected to the negative terminal of the battery which becomes the positive pole when the battery is connected to an external load. Similarly, the last element D, which has a cathode 4 and does not carry an anode, is connected to the positive pole of the battery. Two bipolar elements B and C are operatively inserted between the two terminal (half-cell) elements A and D, but any number of bipolar elements may be so inserted to provide the desired battery voltages. The terminal element A is electrically connected to the negative terminal post 24 of the battery and the opposite terminal element D is connected to positive terminal post 25.

The bipolar element B has its porous cathode 4

(visible in the cutout corner of element B) facing the anode 5 of the terminal element A and its anode 5 facing the porous cathode 4 (not visible) of the adjacent bipolar element C, and so on.

The gas inlet 7 and outlets 8 of elements B, C and D communicate with a distribution manifold and an exhaust manifold whereby air, oxygen or other depolarizing gas is circulated into these box-like elements under a regulatable pressure.

Fig. 3 is a sectioned plan view of a battery container made of inert material such as plastic, hard rubber or the like, and provided with spaced slots 11 or other spacing means, into which the box-like elements 1 are inserted. The slots or spacing means 11 do not extend to the bottom of the container 10, so that there is a space 16 for circulation, drainage, etc., of the electrolyte below the element 1 (see Fig. 4).

When the elements 1 are inserted in the spaced slots 11, spaces 12 are formed between the porous cathode 4 of each element and the anode 5 of the next adjacent element I.

Instead of slots 11 in the side walls of container 10, the elements 1 may be provided with lugs on each side which rest on the top of the side walls of container 10 and suspend the elements 1 at the desired depth in the container.

The walls of the container 10 are provided with conduits 13 and 14 communicating with each of the interelectrodic spaces 12 by conduits 13a and 14a. During operation, electrolyte contained in a separate tank or reservoir is circulated into the spaces 12, conduits 13 and 14 being used, respectively, as inlet and outlet for the electrolyte.

Fig. 4 is a sectional view of the battery along the line 4-4 of Fig. 3. The box-like elements 1 shown in this figure have inoperative bottom portions 15 extending for a certain distance below the bottom clips 6, which delimit the operative portion of the anode element. The bottom portions 15 extend preferably for a length corresponding to 3 to 5 times the interelectrodic distance between a cathode 4 and an anode 5 (that is, the width of spaces 12 of Fig. 3). This inoperative bottom portion 15 has the function of elongating the electric path for any by-pass current through electrolyte in the space 16. In this space 16, solid precipitated oxides of the dissolved anodic metal can collect without interfering with the electrodic areas.

In order to reduce current by-pass through the electrolyte contained in the bottom space 16 of the battery container, the space 16 may be partly filled with insulating packing material such as broken ceramic tubes.

The gas inlets 7 and outlets 8 of the box-like elements 1 are respectively connected through couplings 17 to a gas distributor pipe 18 and to an exhaust collector pipe 19.

A fan or compressor 20 and throttling valves 21 in the inlet line 22 and the exhaust line 23 cooperate to maintain the desired gas pressure inside the box-like elements 1. A cover 9 is provided to avoid electrolyte splashing outside the battery container and the electrolyte in the battery is kept at approximately the level 27 indicated in Fig. 4.

During operation, air, $0_2$, $0_2$-enriched or other depolarizing gas is passed into the interior of the elements B, C, and D by means of the fan 20 (Fig. 4), or other air or gas-circulating means, and is exhausted under the control of the throttling valve 21. A certain constant, positive gas pressure is maintained inside the elements in order to prevent percolation of the electrolyte through the porous cathodes 4 and to establish a three-phase boundary inside the thickness of the porous cathodes. The pressure varies with the porosity and permeability characteristics of the activated porous cathode and is adjusted so that the electrolyte does not flood the pores of the cathode 4 and the gas does not blow through into the electrolyte.

When the battery is connected with an external load, current flows through the electrolyte contained in the interelectrodic spaces 12 to the zinc anodes 5 and through each conductive, box-like bipolar element 1 to the cathode 4 of the same element, and through the electrolyte contained in the next interelectrodic space to the zinc anode of the next adjacent bipolar element, and so on to the positive terminal element 25 of the battery, which is connected to the external load.

During operation, as mentioned above, solid precipitated oxides of the dissolved anodic metal collect in space 16. When the battery is being recharged by the insertion of new anode sheets 5, the electrolyte is drained together with the collected precipitated oxides through a suitable valve draining nozzle 26 in the bottom of the container 10.

In the embodiment illustrated in Figs. 5 to 7, individual, vertical, hollow box-like elements 31 (similar to elements 1 of Figs 1 and 2) of a valve metal, nickel, stainless steel or the like, form cathode elements each having a porous front and rear cathode portion 32 and 34, respectively, mounted in a U-section rectangular frame comprising top, bottom and side pieces 33, 33a, 33b and 33c (Fig. 6), preferably formed from one piece of metal. The rectangular cathode portions 32 and 34 are formed of sintered, activated titanium or other valve metal, or nickel or stainless steel impregnated with catalytic materials as mentioned above. The cathode portions 32 and 34 are preferably welded into the frame formed by the U-shaped parts 33, 33a, 33b and 33c.

The inner faces of the sintered cathode portions 32 and 34 are preferably impregnated with a lipophobic (e.g. hydrophobic) resin and the elements 31 may have optional draining means, as discussed above.

Removable and replaceable, consumable anodes 35 are carried on non-consumable, lightweight support sheets 36 of, for example, titanium, titanium coated with tantalum, nickel or other suitable metal, which are fitted into slots or other spacing means 37 in an insulating, plastic battery case 40. The consumable anodes 35 may be electroplated on the support sheets 36, or

welded, riveted, rolled, secured by thermoplastic electrically-conductive cement, or otherwise attached on the support sheets. Suitable extractor tools engaging in holes (not shown) in the top portion of the support sheets 36 may be provided to facilitate the removal and reinsertion of the support sheets in the slots 37.

The consumable anodes 35 are smaller in size than the overall dimensions of the support sheets 36, so that inoperative edge portions are provided around the support sheets which fit into the slots 37 in the battery container.

Inlets 38 for the electrolyte and outlets 39 are provided with branches 38a and 39a for introducing and circulating electrolyte through the battery container.

Box-like cathode elements 30A, 30B, 30C to 30D (Fig. 5) are mounted in slots 41 in the battery case 40 with each sintered cathode 32 and 34 facing double-faced anodes 35 on the adjacent support sheet 36, except for the first (cathode) and last (anode) element. The first element, 30A, of the series, has an imperforate end wall (in place of the sintered, porous portion 34 of the other elements), which imperforate end wall is adjacent an end wall of the battery case 40. Similarly, facing the last element 30D is a single anode face 35 on a support sheet 36 and which does not carry a zinc anode on its other face. The last support sheet 36 fits into a slot 37 at the opposite end of the battery case from the element 30A. Intermediate cathode elements 30B, 30C, and so forth, each have porous, sintered cathodes 32 and 34 welded therein, and between each of the intermediate cathode boxes, a support sheet 36 having replaceable, consumable anodes 35 on each side thereof, is inserted.

Any number of anode and cathode elements may be inserted between the two terminal elements.

The element 30B has its porous cathode 32 facing one side of the zinc anode between elements 30B and 30C, and its cathode 34 facing the zinc anode 35 between elements 30A and 30B, and so on throughout the cell to the end element 30D.

The container 40 is preferably made of inert material such as a plastic and its spaced slots 37, 41 do not extend to the bottom of the container 40 so that the anode support sheets 36 and the cathode elements 31 do not extend to the bottom of container 40 but are spaced from the bottom of the container so that the electrolyte can circulate in the electrolyte spaces and in space 56 below the anode and cathodes elements and can be drained (with collected precipitated oxides) through the drain opening 42 when desired. To reduce current by-pass through the electrolyte contained in the bottom space 56, this space may be partly filled with insulating packing material such as broken ceramic tubes.

When the cathode elements 31 are in the slots 41 and the support sheets 36 each with two anode faces 35 are in slots 37, spaces 43 are formed between the porous cathodes 32 and 34 and the anode faces 35 through which the electrolyte circulates. The electrolyte, contained in a separate tank or reservoir, is circulated into the spaces 43, conduits 38 and 39 being used as inlet and outlet, respectively, for the electrolyte.

Fig. 6 is an exploded view of two box-like cathode elements 31 and anodes 35 on support sheets 36, showing the elements in their electrical series spatial relationship. The cathode elements 31 are connected together by leads 44 leading to the positive terminal (not shown) of the battery, and the anode support sheets 36 are connected by projecting lugs 36a and leads 45, to each other and to the negative terminal of the battery, to which terminals the connections to the load are made. This embodiment operates as a monopolar battery.

The gas inlets 46 and outlets 47 of each box-like cathode element 31 are connected, respectively, through couplings 48 and 48a to a gas distributor pipe 49 and to an exhaust collector pipe 50. A fan or compressor 51 in the inlet line 52 and a throttling valve 53 in the exhaust line 53a cooperate to maintain the desired gas pressure inside the box-like elements 31 of this battery. A cover 54 is provided to avoid electrolyte splashing outside the battery container and the electrolyte in the battery is kept at approximately the level 55 indicated in Fig. 7.

When the battery is connected with an external load, air $0_2$, $0_2$-enriched or other depolarizing gas is passed into the interior of the elements 31 by means of the fan 51 (Fig.7) or other air or gas-circulating means, and is exhausted under the control of the throttling valve 53. A certain constant, positive pressure is maintained inside the porous cathode boxes 31 in order to prevent percolation by the electrolyte through the porous cathode faces 32 and 34 and for establishing a three-phase boundary inside the thickness of the porous cathode faces 32 and 34. The pressure applied varies with the porosity and permeability characteristics of the activated porous cathode faces and is adjusted so that the electrolyte does not flood the pores of the cathodes 32 and 34 and the gas does not blow through into the electrolyte.

During operation, current flows, through the electrolyte contained in the interelectrode spaces 43, from the porous cathode 32 or 34 to the zinc anode faces 35.

Fig. 8 illustrates a plurality of hollow box-like bipolar anode/cathode elements 64 with removable and replaceable anodes, disposed inside an insulating plastic battery container 61 provided with gas inlets 62 leading into the interiors 63 of elements 64. The container 61 is provided with a removable cover (not shown), electrical connections (not shown) to and from the terminal anodes and cathodes and gas outlets 65. The inlets 62 and outlets 65 are provided with valves 66 and 66a by which the gas pressure inside the cathodes may be controlled. Container 61 is provided with slots or other spacing means 61a into which the hollow, box-like elements 64 are

fitted. Hollow cathode fingers 68 forming the passages for the depolarizing gas are supported from faces 64a of the elements 64, and anodes 69 are supported by the elements 64 between the cathode fingers 68.

Fig. 9 shows in greater detail the construction of the bipolar elements 64 and the hollow cathode fingers 68. The depolarizing gas entering the hollow bipolar elements 64 flows through openings 67 into the base of tapered fingers 68 formed over the major part of their surfaces of corrosion resistant, porous and gas-permeable metal such as spherical particles of sintered valve metal having a porosity of about 50%, impregnated with an oxygen-reducing catalyst, as previously described. These catalysts are capable of reducing 1/2 $O_2$ to $OH^-$, which reacts with the zinc of anodes 69 according to the reaction given above. This reaction produces zinc oxide, some of which remains in solution in the electrolyte and some of which precipitates as ZnO particles, which remain in the electrolyte until the electrolyte (and collected precipitated oxides) is drained from the battery during replacement of the zinc anodes 69 to "recharge" the battery.

One side of the anodes 69 fits into insulating guides 70 mounted on side 64a of the hollow bipolar elements 64 and the other side fits into conducting metal clips 71 and 71a mounted on the opposite element 64. Clips 71 and 71a provide support for an electrical contact between anodes 69 and the bipolar elements 64. The opposite faces of elements 64 are connected by edges 72 shown in Fig. 8.

The elements 64 with the hollow cathode fingers 68 are preferably assembled in succession in container 61 (from left to right) as cell units 60A, 60B, 60E, etc. The first cell unit 60A is a cathode half-cell adjacent the left wall of container 61. It is connected to the positive terminal of the battery. The last element 64 at the right of the battery is an anode half-cell; it is of similar box-configuration to the other elements 64 but has no gas inlets/outlets and has imperforate walls. It is connected to the negative terminal of the battery. To assemble the battery, the anodes 69 for cell unit 60A are inserted in the insulating guides 70 and the element 64 of cell 60B is then assembled (with the clips 71-71a pushed over the right side of anodes 69) to make electrical contact with the anodes of cell 60A. The same procedure is followed for the assembly of each cell until the desired number of cell units is assembled and placed in the container 61 and the terminal elements are connected into the load circuit. For replacement of the anodes 69 in a given cell of the assembled battery, the battery electrolyte (and collected precipitated oxides) is drained, the cell units are removed from the container 61 and the anodes requiring replacement are pulled apart; the partially consumed anodes 69 are removed from the insulating guides 70 and the specific cell units, 60A, 60B, 60E, etc. are reassembled with the clips 71 and 71a gripping the right-hand edge of anodes 69 to restore electrical contact of all the cell units. Alternatively, only the anodes 69 are removed and replaced by new anodes, using a special tool.

The cathode fingers 68 may be slightly tapered to facilitate assembly and disassembly; and each may be one tapered finger extending from top to bottom of the cell units 60A, 60B, etc., or a vertical row of round or conical projections extending from the faces 64A. The tapered interelectrodic gap between the cathode fingers 68 and the anodes 69 is shown exaggerated for better illustration.

During operation, electric current generated by the chemical reactions described above flows from the anodes 69 through clips 71 and 71a to the elements 64, through the connections 72 at each end of elements 64 to the faces 64a, through the cathode fingers 68 and via the electrolyte to the anodes 69 of each element of the battery. Current will continue to flow as described, as long as oxygen is supplied to the cathode fingers 68 from the hollow elements 64 and the anodes 69 remain unconsumed. When one or more of the anodes 69 is consumed, or substantially consumed, the supply of oxygen-containing gas to the elements 64 is stopped, the electrolyte (with collected precipitated oxides) is drained from the cell and the partially consumed anodes are replaced with new anodes.

Figs. 10 and 11 illustrate a modification of the embodiment illustrated in Figs. 8 and 9, in which the container 73 has slots or spacers 61a into which the anode/cathode assemblies (similar to 64, 68 and 69 of Figs. 8 and 9) are removably fitted. The walls of container 73 are provided with conduits 74 and 75 which communicate by channels 74a and 75a with the electrolyte spaces between the anodes 76 and cathode fingers 78. The anodes 76, of zinc or other consumable metal, are mounted on a support consisting of a series of spaced, non-consumable supporting blades or fingers 76a, mounted on or cast integrally with a supporting backplate 77. The metal anodes 76 are plated or otherwise secured on the blades or fingers 76a. Alternatively, preformed consumable metal anode sheets can be secured on the blades 76a or these blades may be in the form of hooks on which pre-formed metal plates are suspended. The blades 76a and backplate 77 may be made of titanium, nickel or other non-corroding metal. The supporting blades 76a with the consumable metal supported thereon, extend between hollow, porous cathodes 78a in fingers 78. The supporting backplate 77 is removably secured, by clips 79, conducting cement or other means, to the impervious wall 80 of box-like elements 81 into the hollow porous cathode fingers 78, which are constructed similarly to the fingers 68 of Figs. 8 and 9. The depolarizing gas is preferably conducted into and out of the gas passage 81 by vertical conduits 83 and 84 connected by slip joints 85 to a gas inlet pipe 86 and an exhaust pipe 87.

During operation, air, $O_2$ or $O_2$-enriched gas is

passed into the interior of elements 81 through conduits 83 by a pump 89 (Fig. 11) or other gas-circulating means, and is exhausted through passages 87 by conduits 84, 90. The pressure in elements 81 is controlled by valves 91. A removable cover 92 on the battery container 73 prevents splashing and spillage from the battery. The electrolyte level is maintained at approximately the level of line 93. A space 94 below the electrode bank permits free communication between the electrolyte spaces and a drain valve 95 permits the container 73 to be drained of electrolyte and accumulated oxide of the consumable anodes, when desired.

The cells of this invention have many advantages over prior-known cells. The cell elements can be assembled and the cell remain idle until current is needed by the system, at which time the cells may be quickly activated by supplying electrolyte to the anode/cathode-containing spaces between the elements and supplying an oxygen-containing gas to the hollow, porous cathodes to start the reactions described above. Deactivation of the cell during periods in which no electric power is required from the cell requires only that gas flow to the cell be discontinued and the electrolyte (together with collected precipitated oxides) drained during the period of idleness or periods of anode replacement.

A common feature of the described embodiments is that the consumable metal anodes are mounted on non-consumable metal supports, the consumable metal anodes being removable from the battery container either alone (as in Figs. 1-4, and Figs. 8-9) or together with their supports (as is necessary in Figs. 5-7 and Figs. 10-11 and optional in Figs. 1-4 and Figs. 8-9).

The consumable anodes may thus be quickly removed and replaced with new or recoated consumable anodes without contacting the cathodes during removal and reinsertion of the anodes so that there is no damage to the cathode element.

## Claims

1. A process of operating a battery comprising a plurality of hollow-box-like gas-depolarisable cathode elements and consumable metal anode elements housed in an inert container, (10, 40, 61, 73), each of said box-like cathode elements (1, 31, 64, 81) having at least one gas-permeable, porous cathode (4, 32/34, 68, 78) in at least one wall and each of said anode elements comprising at least one consumable metal anode (5, 35, 69, 76) mounted on a non-consumable metal support (2, 36, 64/71/71a, 76a/77), the cathode and the anode of adjacent elements being disposed in spaced facing relationship, means (6/11, 41, 61a/71/71a, 61a/79) to removably mount at least said consumable metal anodes (5, 35, 69, 76) of the anode elements in the container (10, 40, 61, 73) to permit removal and insertion of the consumable metal anodes in the container, means to electrically connect said cathode and anode elements to an external load, means (7, 46, 62, 83) to feed a depolarising gas through the interior of said box-like cathode elements (1, 31, 64, 81) to the porous cathodes, a space (16, 56, 94) in the bottom of the container (10, 40, 61, 73) wherein precipitated oxides of the dissolved anodic metal can collect below said anode and cathode elements, and a drain (26, 42, 95) in the bottom of the container for draining electrolyte and collected precipitated oxides material from said space (16, 56, 94), said process comprising:

supplying an alkaline hydroxide electrolyte to the container, supplying oxygen-containing gas to the box-like cathode elements during discharge of electricity from the battery, collecting precipitated oxides material in said space and, when the battery is being recharged by the insertion of new consumable metal anodes, draining electrolyte and collected oxides material through the drain.

2. Apparatus for carrying out the process of claim 1, comprising a battery as defined therein and being characterized in that said gas-permeable porous cathodes (4) are formed in one wall of said hollow box-like cathode elements (1), the opposite wall (2) being impervious and having means (6) for removably supporting a generally flat consumable metal anode (5) on said impervious cathode element wall (2).

3. The apparatus of claim 2, further characterized in that said means for removably supporting the consumable metal anodes (5) on said impervious cathode element walls (2) comprises electrically conductive spring clips (6) disposed adjacent to the edges of said impervious cathode element wall (2).

4. Apparatus for carrying out the process of claim 1, comprising a battery as defined therein and being characterized in that there is a gas-permeable cathode (32, 34) in both the front and back walls of said hollow box-like cathode elements (31) and each anode element comprises consumable metal anodes (35) mounted on opposite sides of a non-consumable metal anode support plate (36), said non-consumable anode support plates being removable and re-insertable in said container.

5. The apparatus of claim 2, 3 or 4, further characterized in that said container (10, 40, 61, 73) has means (11, 41, 61a) in which the hollow box-like cathode elements (1, 31, 64, 81) are slidably received.

6. The apparatus of claim 4 or 5, further characterized in that said container (40) has means (37) for slidably receiving said non-consumable metal anode support plates (36).

7. The apparatus of claim 4, further characterized in that said box-like cathode elements (31) are electrically connected together (by 44) and to a terminal, and said anode support plates (36) are electrically connected together (by 45) and to a terminal.

8. An apparatus for carrying out the process of claim 1, comprising a battery as defined therein and being characterized in that the anode and cathode elements comprise a plurality of hollow

box-like bipolar elements (1, 64, 81) operatively located between a terminal consumable metal anode element and a terminal hollow cathode element, each bipolar element having at least one gas permeable, porous gas-depolarized cathode (4, 68, 78) in one wall and at least one consumable metal anode (5, 69, 76) supported in electrical conducting relationship with the box-like element on the external surface of the other wall of said box-like element.

9. The apparatus of claim 8, further characterized in that each hollow bipolar element (64, 81) has a plurality of hollow pervious cathode fingers (68, 78) protruding from one wall and communicating with the interior of said element, and an impervious opposite wall having a plurality of consumable metal anodes (69, 76) removably supported thereon.

10. The apparatus of claim 9, further characterized in that the consumable metal anodes (69, 76) project at substantially right angles from said opposite wall.

11. The apparatus of claim 9 or 10, further characterized in that it comprises insulating guides (70) on a first wall of each of said hollow elements (64, 81) between said hollow cathode fingers (68, 78) into which one edge of said consumable metal anodes (69, 76) is inserted and clips (71, 71a, 79) of conducting metal on the opposite walls of the hollow elements making electrical contact with the edges of said consumable anodes opposite said insulating guides.

12. The apparatus of any one of claims 2 to 11, further characterized in that the hollow box-like cathode elements (1, 31, 64, 81) are made of a valve metal or nickel, and the cathode (4, 32, 34, 68, 78) comprises a wall of porous, sintered metal and the anode (5, 35, 69, 76) is a metal more electropositive than oxygen.

13. The apparatus of claim 12, further characterized in that the porous sintered metal cathode walls (4, 32, 34, 68, 78) are impregnated with catalyst.

14. The apparatus of any one of claims 2 to 13, further characterized in that the consumable anode (5, 35, 69, 76) is solid or porous zinc, iron, cadmium and alloys thereof.

**Patentansprüche:**

1. Verfahren zum Betreiben einer Batterie mit einer Anzahl von hohlkastenartigen, gas-depolarisierbaren Kathodenelementen und verbrauchbaren Metallanodenelementen, die in einem inerten Behälter (10, 40, 61, 73) untergebracht sind, wobei jedes kastenartige Kathodenelement (1, 31, 64, 81) mindestens eine gasdurchlässige, poröse Kathode (4, 32/34, 68, 78) in mindestens einer Wand aufweist und jedes der Anodenelemente mindestens eine verbrauchbare Metallanode (5, 35, 69, 76) aufweist, die auf einem nicht-verbrauchbaren Metallträger (2, 36, 64/71/71a, 76a/77) angebracht ist, wobei die Kathode und die Anode von benachbarten Elementen im Abstand zueinander und einander zugewandt angeordnet sind, mit Mitteln (6/11, 41, 61a/71/71a, 61a/79) zum entfernbaren Anbringen von mindestens einer der verbrauchbaren Metallanoden (5, 35, 69, 76) der Anodenelemente in dem Behälter (10, 40, 61, 73), um das Entfernen und Einsetzen der verbrauchbaren Metallanoden in dem Behälter zu erlauben, mit Mitteln zum elektrischen Anschließen der Kathoden- und Anodenelemente an eine externe Last, mit Mitteln (7, 46, 62, 83) zum Einleiten eines depolarisierenden Gases durch das Innere der kastenartigen Kathodenelemente (1, 31, 64, 81) in die porösen Kathoden, mit einem Zwischenraum (16, 56, 94) im Boden des Behälters (10, 40, 61, 73), in dem sich niedergeschlagene Oxide des gelösten Anodenmetalls unter den Anoden- und Kathodenelementen sammeln können, und mit einer Abführung (26, 42, 95) im Boden des Behälters zum Ableiten von Elektrolyt und gesammeltem, niedergeschlagenem Oxidmaterial aus dem Raum (16, 56, 94), wobei das Verfahren umfaßt:

Zuführen eines Alkalihydroxidelektrolyten zum Behälter, Zuführen von Sauerstoff enthaltendem Gas zu den kastenartigen Kathodenelementen während der elektrischen Entladung der Batterie, Sammeln von niedergeschlagenem Oxidmaterial in dem Raum und, wenn die Batterie durch das Einsetzen von neuen verbrauchbaren Metallanoden wiedergeladen wird, Ableiten des Elektrolyten und Sammeln von Oxidmaterial durch die Abführung.

2. Vorrichtung zur Durchführung des Verfahrens nach Anspruch 1, mit einer Batterie wie darin definiert und dadurch gekennzeichnet, daß die gasdurchlässigen, porösen Kathoden (4) in einer Wand der hohlkastenartigen Kathodenelemente (1) gebildet sind, wobei die gegenüberliegende Wand (2) undurchlässig ist und Mittel (6) aufweist, um eine im allgemeinen ebene, verbrauchbare Metallanode (5) auf der undurchlässigen Kathodenelementwand (2) abnehmbar zu halten.

3. Vorrichtung nach Anspruch 2, dadurch gekennzeichnet, daß das Mittel zum abnehmbaren Halten der verbrauchbaren Metallanoden (5) auf den undurchlässigen Kathodenelementwänden (2) elektrisch leitende Federklemmen (6) umfaßt, die an den Rändern der undurchlässigen Kathodenelementwand (2) angebracht sind.

4. Vorrichtung zur Durchführung des Verfahrens nach Anspruch 1, mit einer Batterie wie darin definiert und dadurch gekennzeichnet, daß eine gasdurchlässige Kathode (32, 34) sowohl in den Vorderwänden, als auch den Rückwänden der hohlkastenartigen Kathodenelemente (31) vorgesehen ist und jedes Anodenelement verbrauchbare Metallanoden (35) aufweist, die an gegenüberliegenden Seiten einer nicht-verbrauchbaren Metallanoden-Halteplatte (36) angebracht sind, wobei die nicht-verbrauchbaren Anodenhalteplatten entfernbar und in den Behälter wiedereinsetzbar sind.

5. Vorrichtung nach Anspruch 2, 3 oder 4, ferner dadurch gekennzeichnet, daß der Behälter (10, 40, 61, 73) Mittel (11, 41, 61a) aufweist, in denen die hohlkastenartigen Kathodenelemente (1, 31, 64, 81) verschiebbar sitzen.

6. Vorrichtung nach Anspruch 4 oder 5, ferner dadurch gekennzeichnet, daß der Behälter (40) Mittel zum einschiebbaren Aufnehmen der nicht-verbrauchbaren Metallanoden-Halteplatten (36) aufweist.

7. Vorrichtung nach Anspruch 4, ferner dadurch gekennzeichnet, daß die kastenartigen Kathodenelemente (31) miteinander elektrisch verbunden (durch 44) und an eine Klemme angeschlossen sind, und daß die Anodenhalteplatten (36) elektrisch miteinander (durch 45) und mit einer Klemme verbunden sind.

8. Vorrichtung zur Durchführung des Verfahrens nach Anspruch 1, mit einer Batterie wie darin definiert und dadurch gekennzeichnet, daß die Anoden- und Kathodenelemente eine Anzahl hohlkastenartiger, bipolarer Elemente ( 1, 64, 81) aufweisen, die zwischen einem Anschlußanodenelement aus verbrauchbarem Metall und einem Anschlußhohlkatholdenelement funktionsmäßig angeordnet sind, wobei jedes bipolare Element mindestens eine gasdurchlässige, poröse, gasdepolarisierte Kathode (4, 68, 78) in einer Wand aufweist und mindestens eine verbrauchbare Metallanode (5, 69, 76) in elektrisch leitender Beziehung mit dem kastenartigen Element auf der Außenfläche der anderen Wand des kastenartigen Elements gehalten ist.

9. Vorrichtung nach Anspruch 8, ferner dadurch gekennzeichnet, daß jedes hohle, bipolare Element (64, 81) eine Anzahl von hohlen, durchlässigen Kathodenfingern (68, 78) aufweist, die von einer Wand vorstehen und mit dem Inneren des Elements zusammenwirken, und mit einer undurchlässigen gegenüberliegenden Wand, die eine Anzahl von verbrauchbaren Metallanoden (69, 76) aufweist, die darauf abnehmbar gehalten sind.

10. Vorrichtung nach Anspruch 9, dadurch gekennzeichnet, daß die verbrauchbaren Metallanoden (69, 76) im wesentlichen unter rechten Winkeln von der gegenüberliegenden Wand vorstehen.

11. Vorrichtung nach Anspruch 9 oder 10, dadurch gekennzeichnet, daß sie Isolierführungen (70) an einer ersten Wand von jedem der hohlen Elemente (64, 81) zwischen den Hohlkathodenfingern (68, 78) aufweist, in die eine Kante der verbrauchbaren Metallanoden (69, 76) eingesetzt wird und wobei Klammern (71, 71a, 79) aus leitendem Metall an den gegenüberliegenden Wänden der hohlen Elemente einen elektrischen Kontakt mit den Rändern der sich verbrauchenden Anoden gegenüber den Isolierführungen herstellen.

12. Vorrichtung nach einem der Ansprüche 2 bis 11, dadurch gekennzeichnet, daß die hohlkastenartigen Kathodenelemente (1, 31, 64, 81) aus einem Ventilmetall oder aus Nickel hergestellt sind und daß die Kathode (4, 32, 34, 68, 78) eine Wand aus porösem, gesintertem Metall aufweist und die Anode (5, 35, 69, 76) ein Metall ist, das stärker elektropositiv als Sauerstoff ist.

13. Vorrichtung nach Anspruch 12, dadurch gekennzeichnet, daß die porösen, gesinterten Metallkathodenwände (4, 32, 34, 68, 78) mit einem Katalysator imprägniert sind.

14. Vorrichtung nach einem der Ansprüche 2 bis 13, dadurch gekennzeichnet, daß die verbrauchbare Anode (5, 35, 69, 76) festes oder poröses Zink, Eisen, Kadmium oder Legierungen davon ist.

**Revendications**

1. Un procédé de mise en oeuvre d'une pile comprenant plusieurs éléments de cathode creuse, en forme de boîte, dépolarisable par gaz et des éléments d'anode logés dans un conteneur inerte, (10, 40, 61, 73), chacun desdits éléments de cathode en forme de boîte (1, 31, 64, 81) ayant au moins une cathode perméable au gaz, poreuse (4, 32/34, 68, 78) dans au moins un de ses murs et chacun desdits éléments d'anode comprenant au moins une anode en métal consommable (5, 35, 69, 76) montée sur un support en métal non-consommable (2, 36, 64/71/71a, 76a/77), la cathode et l'anode d'éléments adjacents étant disposées en relation spatiale espacée, des moyens (6/11, 41, 61a/71/71a, 61a/79) montés de façon à pouvoir de les enlever au moins lesdites anodes en métal consommable (5, 35, 69, 76) des éléments d'anode dans le conteneur (10, 40, 61, 73) pour permettre l'enlèvement et l'insertion d'anodes en métal consommable dans le conteneur, des moyens pour connecter électriquement lesdits éléments de cathode et d'anode à une charge externe, des moyens (7, 46, 62, 83) pour passer un gaz dépolarisant à travers l'intérieur desdits éléments de cathode en forme de boîte (1, 31, 64, 81) aux cathodes poreuses, un espace (16, 56, 94) dans le fond du conteneur (10, 40, 61, 73) dans lequel les oxydes précipités du métal anodique dissout peuvent être collectés sous lesdits éléments de cathode et d'anode, et un écoulement (26, 42, 95) au fond du conteneur pour drainer l'électrolyte et les matériaux/oxydes précipités récoltés dudit espace (16, 56, 94), ledit procédé comprenant:

la fourniture d'un électrolyte d'hydroxyde alcalin au conteneur, la fourniture d'un gaz contenant de l'oxygène aux éléments de cathode en forme de boîte pendant le déchargement d'électricité par la pile, la collecte des matériaux/oxydes précipités dans ledit espace et, lorsque la pile est en train d'être rechargée par l'insertion de nouvelles anodes en métal consommable, le drainage de l'électrolyte et des matériaux/oxydes collectés à travers l'écoulement.

2. Un appareil pour mettre en oeuvre le procédé de la revendication 1, comprenant une pile comme y définie et étant caractérisée en ce que lesdites cathodes poreuses perméables au gaz (4) sont formées dans un mur desdits éléments de cathode en forme de boîte (1), le mur opposé (2) étant imperméable et ayant des moyens (6) pour supporter, de façon à pouvoir permettre de l'enlever, une anode en métal consommable (5) généralement plate sur ledit mur imperméable (2) d'élément de cathode.

3. L'appareil de la revendication 2, caractérisé de plus en ce que lesdits moyens pour supporter, de façon à pouvoir permettre de l'enlever, des anodes en métal consommable (5) sur lesdits murs imperméables d'élément de cathode (2) comprend des pinces à ressort électriquement conductrices (6) disposées adjacentes au bord dudit mur imperméable d'élément de cathode (2).

4. Un appareil pour mettre en oeuvre le procédé de la revendication 1, comprenant une pile comme y définie et étant caractérisée en ce qu'il y a une cathode perméable au gaz (32, 34) à la fois sur les murs avants et arrières desdits éléments de cathode en forme de boîte (31) et que chaque élément d'anode comprend des anodes en métal consommable (35) montées sur les côtés opposés d'une plaque de support d'anode en métal non-consommable (36), ladite plaque de support d'anode en métal non-consommable étant enlevable et réinsérable dans ledit conteneur.

5. L'appareil de l'une des revendications 2, 3 ou 4, caractérisé de plus en ce que ledit conteneur (10, 40, 61, 73) a des moyens (11, 41, 61a) dans lesquels les éléments de cathode creux en forme de boîte (1, 31, 64, 81) sont reçus en glissant.

6. L'appareil de la revendication 4 ou 5, caractérisé de plus en ce que ledit conteneur (40) a des moyens (37) pour recevoir en glissant lesdites plaques de support d'anode en métal non-consommable (36).

7. L'appareil de la revendication 4, caractérisé de plus en ce que lesdits éléments de cathode en forme de boîte (31) sont connectés électriquement ensemble (par 44) et à un terminal, et que lesdites plaques de support d'anode (36) sont connectées électriquement ensemble (par 45) et à un terminal.

8. Un appareil pour mettre en oeuvre le procédé de la revendication 1, comprenant une pile comme y définie et étant caractérisée en ce que les éléments de cathode et d'anode comprennent plusieurs éléments bipolaires en forme de boîte (1, 64, 81) situés operativement entre un élément d'anode terminal consommable et un élément de cathode terminal creux, chaque élément bipolaire ayant au moins une cathode perméable au gaz, poreuse, dépolarisable par le gaz (4, 68, 78) dans un mur et au moins une anode en métal consommable (5, 69, 76) supportée en relation conductrice électrique avec l'élément en forme de boîte à la surface externe de l'autre mur dudit élément en forme de boîte.

9. L'appareil de la revendication 8, caractérisé de plus en ce que chaque élément bipolaire creux (64, 81) a plusieurs doigts de cathode creux perméables (68, 78) faisant des excroissances d'un mur et communiquant avec l'intérieur dudit élément, et un mur opposé imperméable portant plusieurs anodes en métal consommable (69, 76), de façon à pouvoir permettre de l'enlever.

10. L'appareil de la revendication 9, caractérisé de plus en ce que les anodes en métal consommable (69, 76) projètent à des angles substantiellement droits desdits murs opposés.

11. L'appareil de la revendication 9 ou 10, caractérisé de plus'en ce qu'il comprend des guides isolants (70) sur un premier mur de chacun desdits éléments creux (64, 81) entre lesdits doigts de cathode (68, 78) dans lesquels un bord desdites anodes en métal consommable (69, 76) est inséré et des pinces (71, 71a, 79) en métal conducteur sur les murs opposés aux éléments vides faisant un contact électrique avec les bords desdites anodes opposées auxdits guides isolants.

12. L'appareil de n'importe quelle des revendications 2 à 11, caractérisé en ce que les éléments de cathode creux en forme de boîte (1, 31, 64, 81) sont faites d'un métal d'arrêt ou de nickel, et en ce que la cathode (4, 32, 34, 68, 78) comprend un mur en métal poreux, fritté et que l'anode (5, 35, 69, 76) est un métal plus électropositif que l'oxygène.

13. L'appareil de la revendication 12, caractérisé de plus en ce que les murs de cathode (4, 32, 34, 68, 78) en métal poreux fritté sont imprégnés de catalyseur.

14. L'appareil de n'importe quelle revendication 2 à 13, caractérisée de plus en ce que l'anode consommable (5, 35, 69, 76) est en zinc, fer, cadmium, ou leurs alliages solides ou poreux.

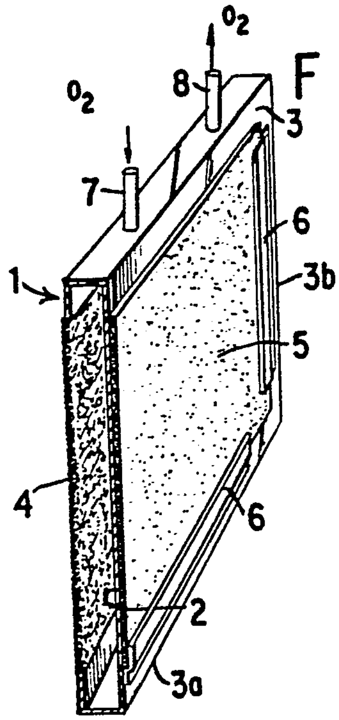


FIG.1

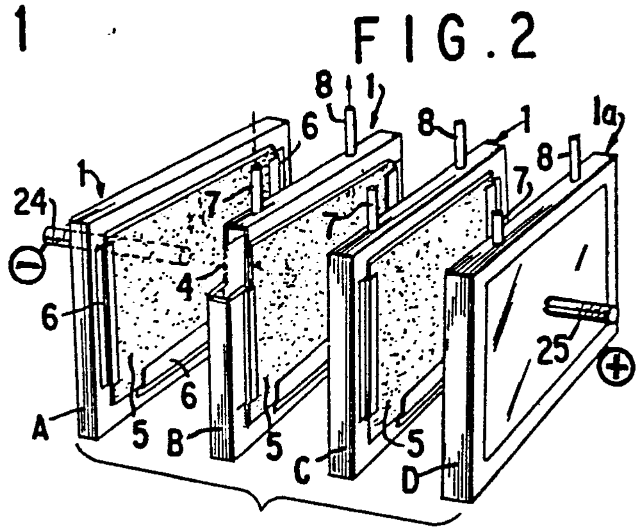


FIG.2

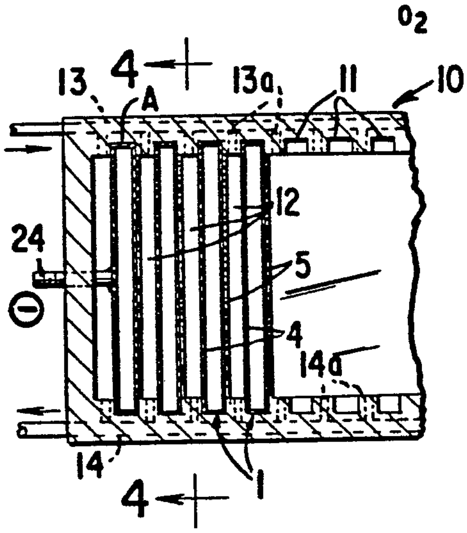


FIG.3

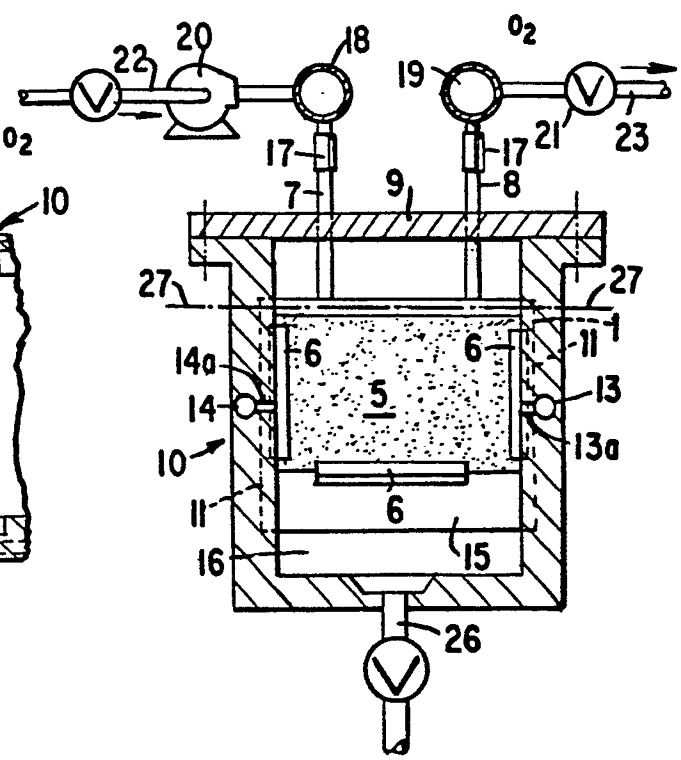


FIG.4

FIG. 5

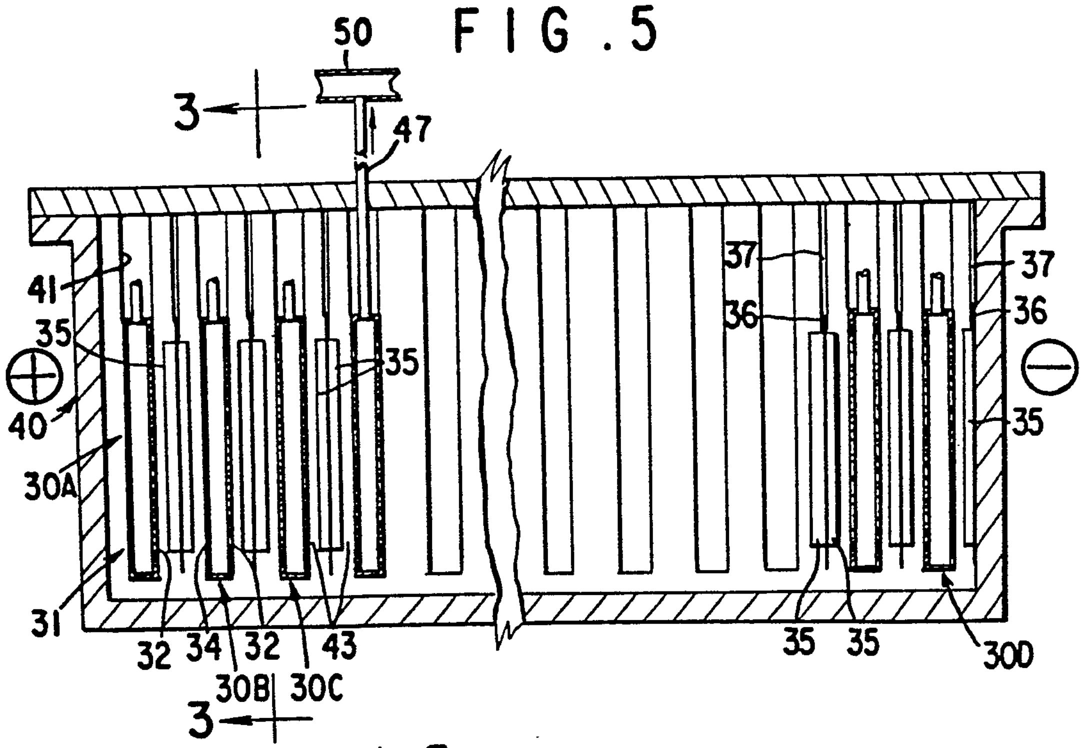


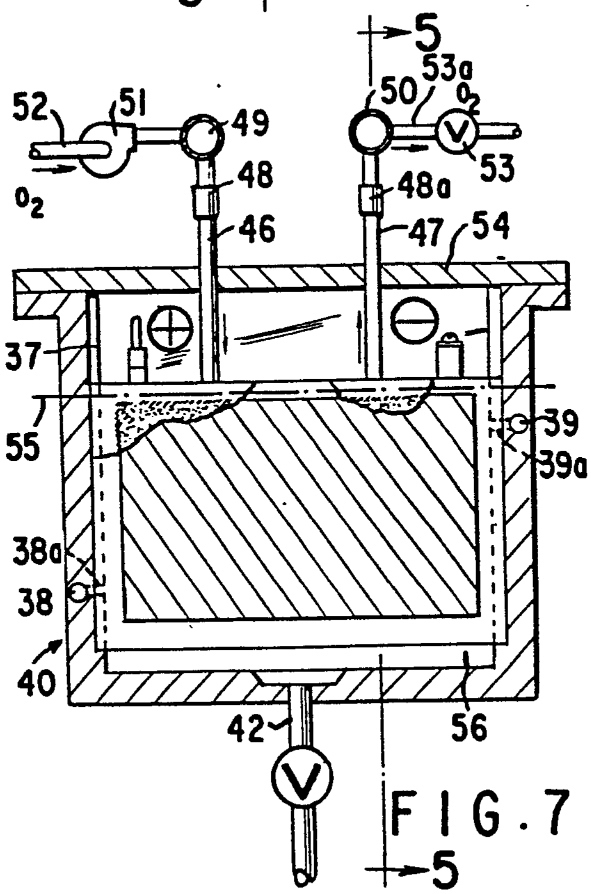


FIG. 7

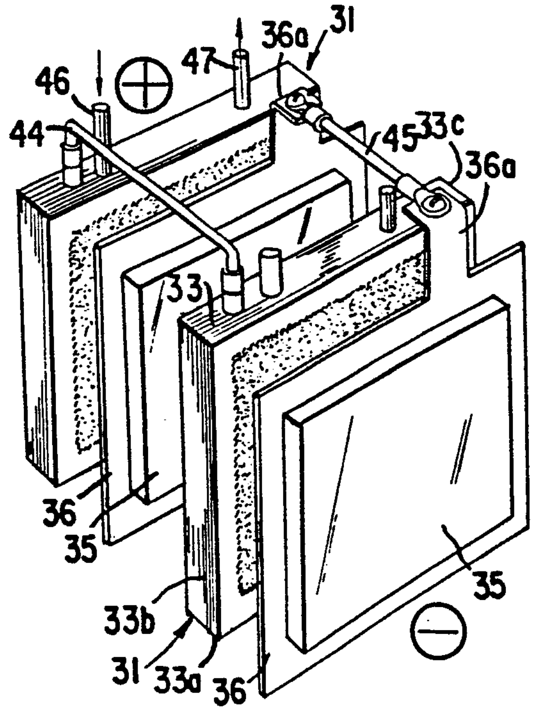


FIG. 6

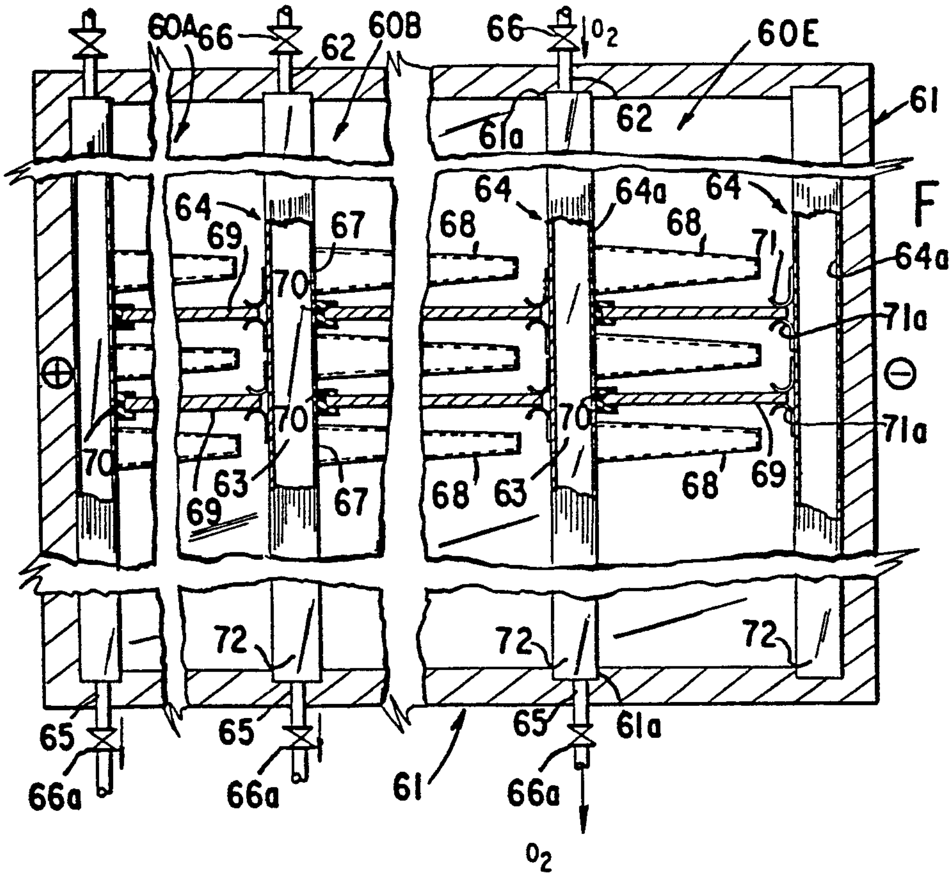
60A
66
62
60B
66
$O_2$
60E
61
61a
62
64
69
67
70
68
64
64a
68
64
71
64a
71a
71a
70
69
63
69
67
68
63
70
68
69
72
72
72
65
65
65
61a
66a
66a
61
66a
$O_2$

FIG.8

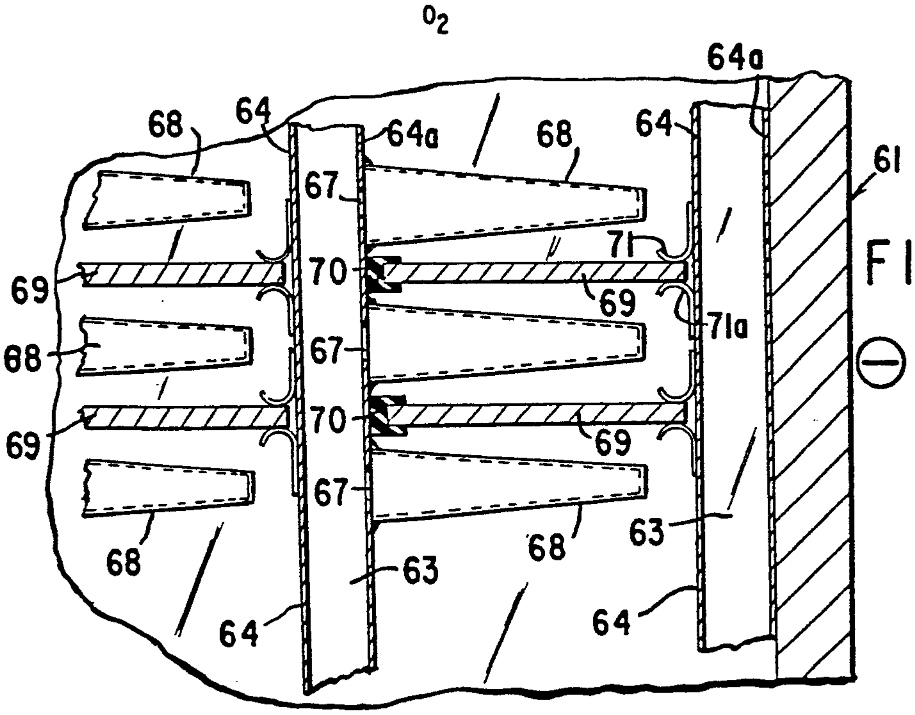
64a
68
64
64a
68
64
61
67
71
69
70
69
71a
68
67
69
70
69
67
63
68
68
63
64
64

FIG.9

FIG.10

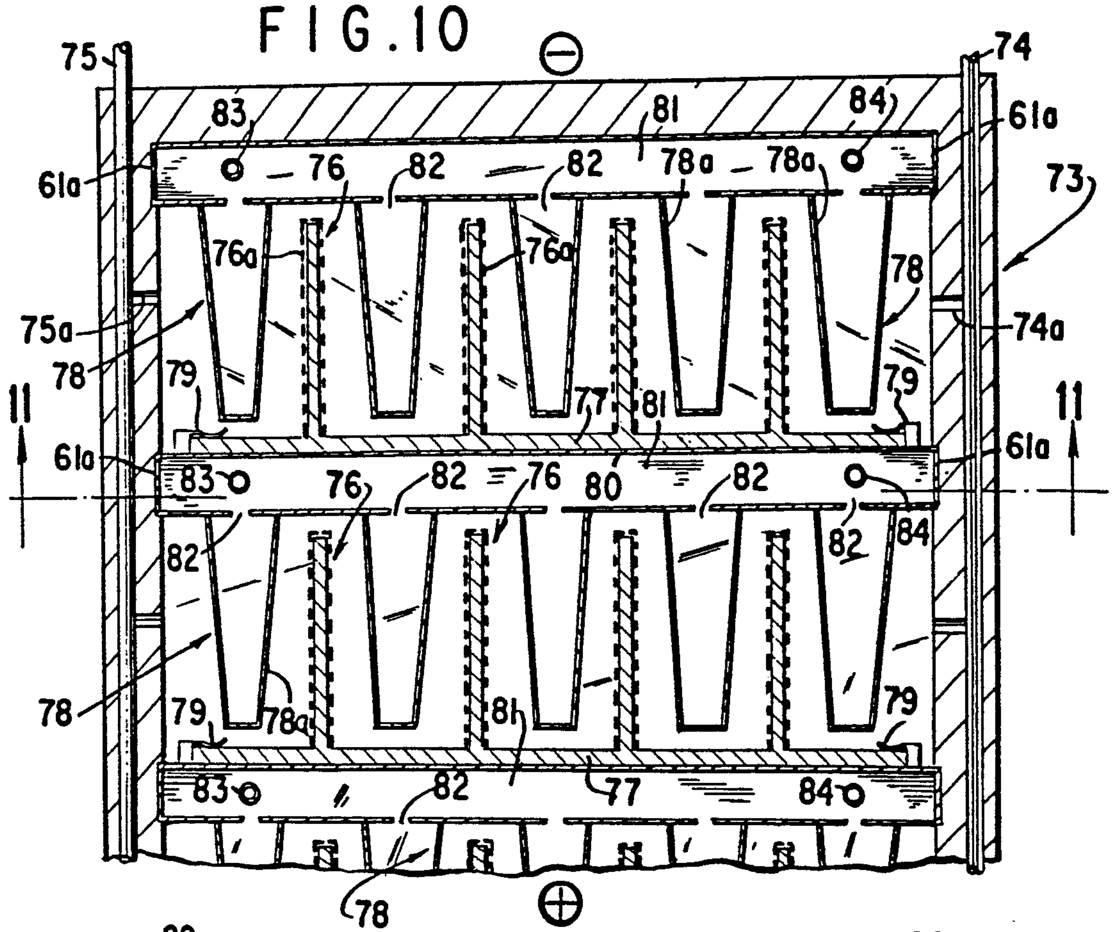
75
74
83
81
84
61a
76
82
82
78a
78a
61a
73
76a
76a
78
75a
74a
78
79
77
81
79
11
11
61a
83
76
82
76
80
82
84
61a
82
82
84
78
79
78a
81
79
83
82
77
84
78

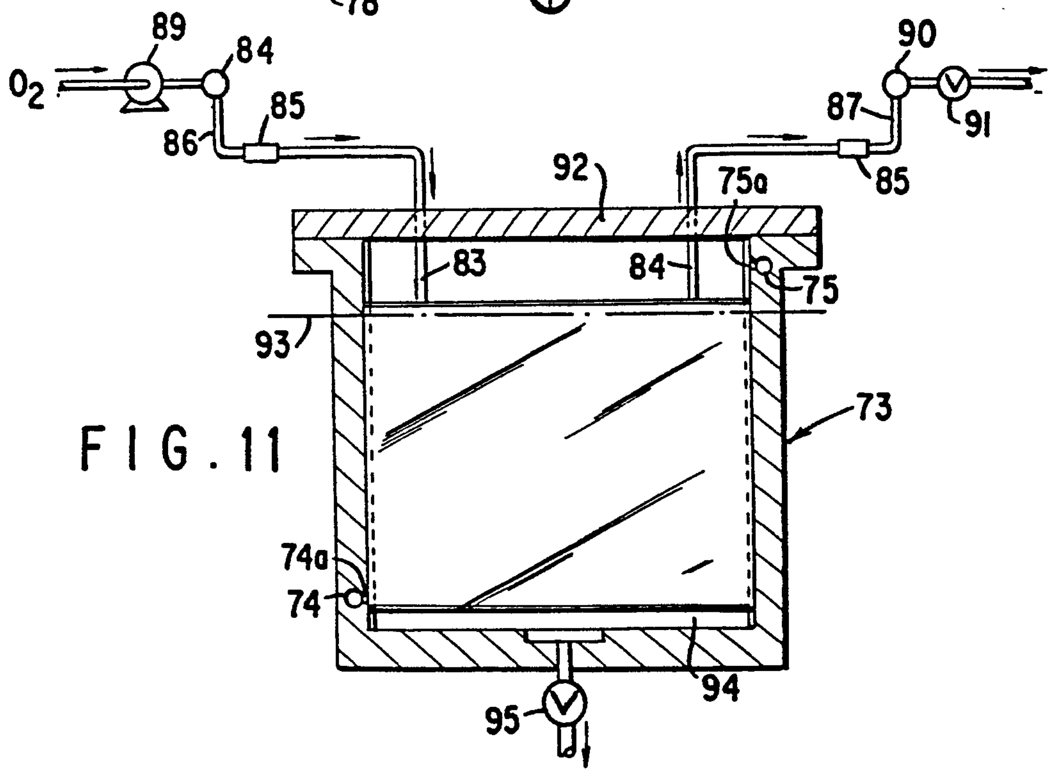
89
84
90
O2
85
87
91
86
92
75a
85
83
84
75
93
73
74a
74
94
95

FIG.11